# EUROPEAN PATENT SPECIFICATION

(11) **EP 2 736 787 B1**
(45) Date of publication and mention of the grant of the patent: **05.12.2018**
(21) Application number: 12759233.5
(22) Date of filing: 25.07.2012
(51) Int. Cl.: B61D 15/06, B61G 11/16, F16F 7/12

(54) **COLLAPSIBLE ELEMENT OF A RAILWAY VEHICLE**
KLAPPBARES ELEMENT FÜR EIN SCHIENENFAHRZEUG
ÉLÉMENT APLATISSABLE DE VÉHICULE FERROVIAIRE

(30) Priority: 25.07.2011 IT TO20110671
(43) Date of publication of application: 04.06.2014
(73) Proprietor: HITACHI RAIL ITALY S.p.A., Napoli (IT)
(72) Inventor: LENZI, Luca, 51034 Cantagrillo (IT)
(74) Representative: Lovino, Paolo
(86) International application number: PCT/IB2012/053800
(87) International publication number: WO 2013/014628

(56) References cited:
- EP-A1- 2 011 713
- EP-A2- 1 746 007
- EP-A2- 1 873 036
- WO-A1-2011/012884
- FR-A1- 2 775 240
- US-A- 3 899 047

## Description

### TECHNICAL FIELD

The present invention relates to a collapsible element of a railway vehicle.

### BACKGROUND ART

As known, the locomotives and wagons of railway vehicles have, at their ends, elements or structures responsible for absorbing energy in the event of a frontal impact. For example, using a pair of collapsible elements, which are mounted cantilevered along respective horizontal axes parallel to the longitudinal direction of the vehicle, are arranged in transversely spaced positions to one another and, in general, comprise box-type bodies which carry, at one end, an anti-climber plate. The horizontal axes of the collapsible elements are at a height from the ground such that, in case of an accident, the anti-climber plates come into contact against corresponding anti-climber plates of the contacted wagon and prevent a relative sliding in the vertical direction to avoid a lifting of the wagons.

At the same time, the box-type bodies absorb kinetic energy by deforming, i.e. by converting said kinetic energy into plastic deformation energy, until the appropriate stop bumpers limit the deformation, or until the box-type bodies have reached their maximum compaction.

Practically, when the anti-climber plates come into contact with each other during a collision, the respective collapsible elements are never perfectly coaxial with each other, but there is an offset in the vertical direction. This offset generates an asymmetric breakdown of the load between the box-type bodies and a rotation of the anti-climber plate, for which the amount of total energy actually absorbed is less than that foreseen in planning.

To solve this drawback, the patent EP2011713 discloses a guide system having a series of vertical partitions, which are spaced along the longitudinal axis of the collapsible element and are axially drilled. The guide system has an axial stem, which is fixed to a rear face of the anti-climber plate and slidably engages a part of said partitions. During a frontal impact, the axial stem retracts and inserts into the remaining part of the partitions, which then guide the axial sliding of the stem, thereby preventing deformation of the axial stem and the rotations of the anti-climber plate.

The guide system just described is not appropriate in the case wherein it is not possible to provide a free space behind the collapsible element to house the axial stem once the plastic deformation is complete.

FR2775240A1 corresponds to the preamble of claim 1 and discloses a buffer which absorbs energy by a visco-elastic shock absorber and by plastically deformable absorbers, which plastically deform only above a given load threshold, after the visco-elastic shock absorber has already performed its absorbing function.

### DISCLOSURE OF INVENTION

The purpose of the present invention is to provide a collapsible element of a railway vehicle, which allows to solve the above problem in a simple and economic way.

According to the present invention, a collapsible element of a railway vehicle is made, as defined in claim 1.

### BRIEF DESCRIPTION OF THE DRAWINGS

The invention will now be described with reference to the accompanying drawings, which illustrate an non-limiting example of embodiment, wherein:
- Figure 1 shows, in perspective and with parts removed for clarity, a railway vehicle having a preferred embodiment of the collapsible element according to the present invention;
- Figure 2 is a different perspective that shows, in enlarged scale and in a cut-away view, the collapsible element of Figure 1;
- Figure 3 shows the plastic deformation of the collapsible element at the end of a frontal impact; and
- Figure 4 shows the collapsible element according to the section of the line IV-IV of Figure 2.

### BEST MODE FOR CARRYING OUT THE INVENTION

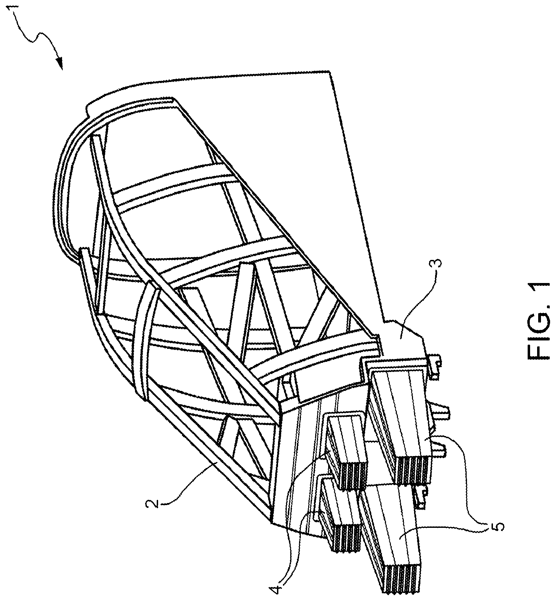

In figure 1, number 1 indicates as a whole, the locomotive of a railway vehicle. The locomotive 1 comprises a frame 2, which frontally comprises a vertical head 3 that, in general, form a step so as to have two parts at different heights, horizontally spaced from one another. Said parts respectively support a pair of deformable upper elements 4 and a pair of lower deformable elements 5. The elements 4 and 5 are collapsible to absorb energy during frontal impact of the locomotive 1.

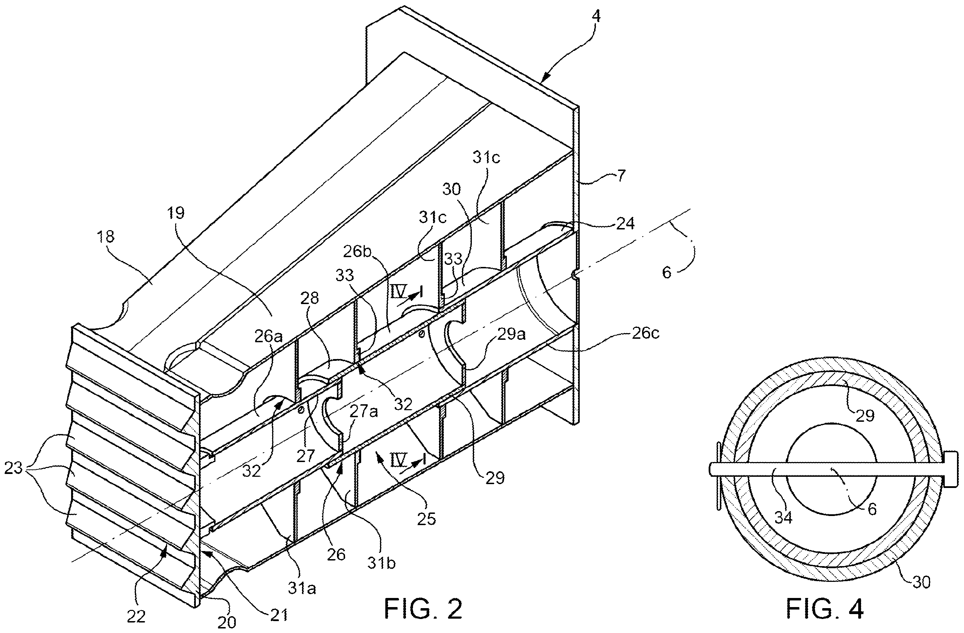

With reference to Figure 2, each element 4 extends cantilevered from the head 3 along an axis 6 substantially horizontal and parallel to the longitudinal direction of the locomotive 1, and has a overall truncated-pyramid shape which widens towards the head 3.

With reference to Figure 2, the element 4 terminates, at the rear, with a substantially vertical plate 7, which is fixed to the head 3 in a known manner thus not described in detail.

The element 4 further comprises four box-type or tubular bodies 18, which are plastically deformable by compression, are arranged along the lateral edges of the element 4, have a quadrangular cross-section, and preferably have substantially a frustoconical shape that widens towards the head 3 to increase the energy absorbed with the increasing of the compression stroke along the axis 6.

The element 4 comprises a covering sheet 19 arranged along the four sides, so as to cover at least part of the bodies 18 towards the outside. The element 4 also comprises a vertical front plate 20, which has a rear face 21 fixed to the front ends of the bodies 18 and a front face 22 which leads in fixed positions, a plurality of ribs or horizontal teeth 23, or other equivalent devices, to perform an anti-climber function when the plate 20 comes into contact, during a frontal impact, with a corresponding anti-climber plate of another railway vehicle.

The dimensions, the mutual distance and the number of teeth 23 is such as to limit the possibility of reciprocal sliding in a vertical direction between the anti-climber plates.

The element 4 also comprises a guide device 25 to prevent rotation of the plate 20 during the plastic deformation of the bodies 18 in case of frontal impact, so that the plate 20 allocates the load uniformly on bodies 18, allowing the element 4 to operate correctly and to absorb the amount of energy foreseen in planning.

The device 25 comprises a stem 26, which is fixed at its front end, to the face 21 and, at its rear end, to the plate 7. The fixing, for example, is defined by welds 24.

The stem 26 extends along the axis 6 in a central space between the bodies 18, is cylindrical tubular, and is constituted by a plurality of tubes 26a, 26b, 26c coupled together telescopically. In particular, the tube 26a comprises a rear end portion 27 which engages in an axially sliding manner a front end portion 28 the of the tube 26b; and the tube 26b comprises a rear end portion 29 which engages in an axially sliding manner a front end portion 30 of the tube 26c. Therefore, the tubes 26a and 26c are fixed respectively to the plates 20 and 7.

The portions 27 and 29 terminate at the rear with respective bottom walls 27a and 29a, which are transverse to the axis 6 and are axially facing each other.

The device 25 further comprises a plurality of partitions, in particular four, which are housed in the deformable structure defined by the bodies 18 and the covering sheet 19, are fixed to the bodies 18 and/or the covering sheet 19, for example by welding, are orthogonal to the axis 6 and are axially spaced from one another.

The partitions have, at the center, respective guide holes 32, which are coaxial with each other along the axis 6 and are engaged by the tubes 26a, 26b, 26c. In particular, the partitions are constituted by a front partition 31a engaged by the tube 26a; an intermediate partition 31b engaged by the tube 31b; and two rear partitions 31c engaged by the tube 26c.

Preferably, the partition 31b has a thickening in a central annular area 33 surrounding the holes 32, so as to reinforce the area 33 with respect to the periphery of the partitions 31b. In particular, in the partition 31b, one of the two faces is flat, while the other has a step that highlights the area 33.

The tube 26b is not welded to any component. However, a retention element is provided, which keeps the tube 26b in a fixed axial position and which breaks above a given compression along the axis 6, in particular in the event of a frontal impact, so as to leave the tube 26b free to slide axially with respect to the tubes 26a and 26c under the guide of the partition 31b and of the portion 30. The retention element is defined by at least one transverse pin 34 (Figure 4). In particular, a first pin is provided (not shown) which passes through the portions 27 and 28, and a second pin which passes through the portions 29 and 30.

In the event of a frontal impact of the locomotive 1 against a locomotive or a wagon which carries a pair of collapsible elements similar to elements 4, each element 4 is deformed plastically in compression, while the partitions 31c support the tube 26c, and the partitions 31a and 31b contribute to guide respectively the axial retraction of the tubes 26a and 26b, together with the guide function performed by the portions 28 and 30.

In this way, inclinations of the stem 26 are avoided, whereby the compressive stresses from the plate 20 are spread over the bodies 18 in an evenly distributed manner.

During the impact, the bodies 18 and the coating 19 progressively crumple beginning from their front area, and the tube 26a axially retracts under the guide of the partition 26a and the portion 28.

When the stress reaches a given threshold on the pin 34, the latter breaks, whereby the tube 26b is released and can move back axially under the guide of the partition 31b and the portion 30 of the tube 26c, which instead will remain stationary.

When the plastic deformation reaches an intermediate area next to the portion 28 and/or when the tube 26a is housed completely in the tube 26b, with the wall 27a which is entered into abutment against the wall 29a, also the tube 26b starts to actually move back axially inside the tube 26c.

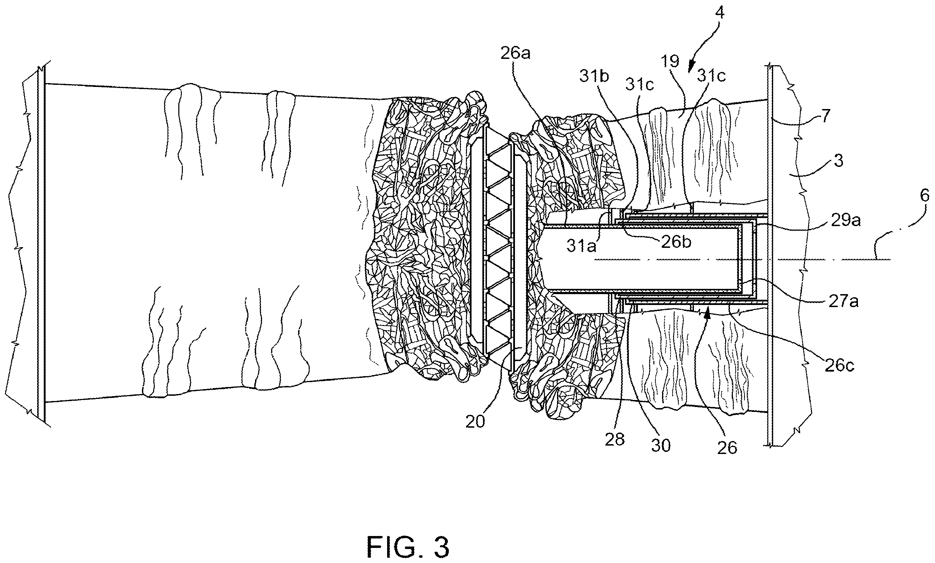

Figure 3 shows a final stage of plastic deformation of the element 4: the tube 26b, in turn, is housed in the tube 26c, with the wall 29a arranged in abutment against the plate 7 or against the bottom of the tube 26c.

The element 4 is designed so as to absorb energy without the plastic deformation reaching the rear end portion of the element 4 wherein the tube 26c is housed. In fact, the tubes 26a and 26b have lengths such that, at the end of the deformation of the element 4, are housed inside the tube 26c: at this point, the deformation stroke is concluded for the fact that the tubes 26a, 26b and 26c perform the function of internal "buffer", as they are very rigid.

Thanks to the guide exerted by the partitions 31a, 31b and by the portions 28 and 30, the axis of the stem 26 remains substantially horizontal and the four bodies 18 substantially crumple to each other_in a substantially uniform way. In other words, at the end of the impact, the stem 26 has a slight inclination with respect to axis 6. Therefore, the operation of the plate 20 is optimal, since there is no significant lifting of the locomotive 1 and phenomena of climb or overlap, and the risk of derailment is extremely reduced.

The friction caused by the sliding of the tubes 26a and 26b in the partitions 31a and 31b and in the portions 28 and 30 is relatively low, so that it generates slight reactions along the axis 6.

The larger amount of energy (about 70%) is dissipated by the deformation of bodies 18. The remaining part is dissipated by the covering 19 and the weld beads. Regarding the head 3, it is a substantially rigid structural element that does have an energy dissipation function, but guarantees the support and the connection of the elements 4.

Therefore, it appears evident that the presence of the telescopic coupling allows to effectively drive the stem 26, with no need to reserve space behind the absorber 4 for the escape of the stem 26.

Furthermore, the tube 26c and the partitions 31c tend to stiffen the rear area of the element 4, without creating additional external dimensions, in order to effectively stabilize the plastic deformation.

Given the reduced dimensions in the transverse direction, the element 4 can also be installed on locomotives and wagons already operative to replace less effective absorbers.

From the above it is finally clear that the element 4 described can be subject to modifications and variants which do not depart from the scope of protection of the present invention.

In particular, the tubular bodies 18 may have shape and/or dimensions different from those indicated, and/or the elements 5 may be connected to support structures other than the head 3.

The tubes 26a, 26b, 26c could be replaced with stem portions having a structure different from that illustrated, and/or the tube 26c may be attached to the partitions 31c alternatively or in combination to the attachment to the plate 7.

## Claims

1. A collapsible element (5) of a railway vehicle; the collapsible element comprising:
- a rear plate (7) connectable to a support (3);
- an absorption structure (18,19), which extends in a cantilevered fashion from said rear plate (7) along a substantially horizontal axis (6), is plastically deformable to absorb energy, and has a front end supporting an anti-climber plate (20);
- a guide device (25) comprising;
a) a plurality of partitions (31a, 31b, 31c) orthogonal to said axis (6), housed in said absorption structure between said anti-climber and rear plates (20,7) in positions axially spaced from one another, fixed to said absorption structure, and having, at the centre, respective coaxial holes (32);
b) a stem (26), which is fixed to said anti-climber plate (20), extends along said axis (6) inside said absorption structure, and engages said holes (32);
**characterized in that**:
- said anti-climber plate (20) is fixed to the front end of said absorption structure (18,19);
- said stem (26) is constituted by a plurality of stem portions (26a,26b,26c), which are coaxial, are coupled in an axially sliding manner to one another and comprise a rear end stem portion (26c);
- said collapsible element (5) comprises first fixing means (24) to fix said rear end stem portion (26c) to said rear plate (7) and/or to said partitions (31a, 31b, 31c).

2. A collapsible element according to claim 1, **characterized in that** said first fixing means (24) connect said rear end stem portion (26c) to said rear plate (7).

3. A collapsible element according to any one of the preceding claims, **characterized in that** said stem (26) further comprises a front end stem portion (26a) and at least an intermediate stem portion (26b).

4. A collapsible element according to claim 3, **characterized by** comprising second fixing means (34) for fixing said intermediate stem portion (26b), said second fixing means (34) being frangible above a given stress threshold along said axis (6).

5. A collapsible element according to claim 3 or 4, **characterized by** comprising at least a first partition (31a) engaged in an axially sliding manner by said front end stem portion (26a), and at least a second partition (31b) engaged in an axially sliding manner by said intermediate stem portion (26b) .

6. A collapsible element according to any one of the preceding claims, **characterized in that** said stem portions (26a,26b,26c) are defined by tubes coupled telescopically with one another.

7. A collapsible element according to claim 6, **characterized in that** the rear ends of some of said tubes are defined by respective base walls (27a,29a), which are transverse to said axis (6) and face one another so as to axially abut against each other when said tubes have entered completely one inside the other.

## Patentansprüche

1. Klappbares Element (5) eines Schienenfahrzeugs, wobei das klappbare Element umfasst:
- eine Rückplatte (7), die mit einem Träger (3) verbindbar ist;
- eine Absorptionsstruktur (18, 19), die sich freitragend von der Rückplatte (7) entlang einer im Wesentlichen horizontalen Achse (6) erstreckt, welche plastisch verformbar ist, um Energie zu absorbieren, und ein Frontende aufweist, das eine Aufkletterschutzplatte (20) trägt;
- eine Führungseinrichtung (25), umfassend;
a) eine Vielzahl von Trennwänden (31a, 31b, 31c) orthogonal zu der Achse (6), die in der Absorptionsstruktur zwischen der Aufkletterschutzplatte und der Rückplatte (20, 7) in axial voneinander beabstandeten Positionen untergebracht sind, an der Absorptionsstruktur befestigt sind und in der Mitte entsprechende koaxiale Löcher (32) aufweisen;
b) einen Stamm (26), der an der Aufkletterschutzplatte (20) befestigt ist, sich entlang der Achse (6) innerhalb der Absorptionsstruktur erstreckt und in die Löcher (32) eingreift;
**dadurch gekennzeichnet, dass**:
- die Aufkletterschutzplatte (20) an dem Frontende der Absorptionsstruktur (18, 19) befestigt ist;
- der Stamm (26) aus einer Vielzahl von Stammabschnitten (26a, 26b, 26c) besteht, die koaxial sind, axial verschiebbar miteinander gekoppelt sind und einen Rückende-Stammabschnitt (26c) umfassen;
- das klappbare Element ein (5) erstes Befestigungsmittel (24) zum Befestigen des Rückende-Stammabschnitts (26c) an der Rückplatte (7) und/oder an den Trennwänden (31a, 31b, 31c) umfasst.

2. Klappbares Element nach Anspruch 1,
**dadurch gekennzeichnet, dass** die ersten Befestigungsmittel (24) den Rückende-Stammabschnitt (26c) mit der Rückplatte (7) verbinden.

3. Klappbares Element nach einem der vorhergehenden Ansprüche, **dadurch gekennzeichnet, dass** der Stamm (26) ferner einen Frontende-Stammabschnitt (2 6a) und mindestens einen Mittel-Stammabschnitt (26b) umfasst.

4. Klappbares Element nach Anspruch 3, **dadurch gekennzeichnet, dass** es ein zweites Befestigungsmittel (34) zum Fixieren des Mittel-Stammabschnitts (26b) umfasst, wobei das zweite Befestigungsmittel (34) oberhalb eines gegebenen Spannungsschwellenwerts entlang der Achse (6) zerbrechlich ist.

5. Klappbares Element nach Anspruch 3 oder 4, **dadurch gekennzeichnet, dass** es mindestens eine erste Trennwand (31a), die durch den Frontende-Stammabschnitt (26a) axial gleitend in Eingriff steht, und mindestens eine zweite Trennwand (31b) umfasst, die durch den Mittel-Stammabschnitt (26b) axial gleitend in Eingriff steht.

6. Klappbares Element nach einem der vorhergehenden Ansprüche, **dadurch gekennzeichnet, dass** die Stammabschnitte (26a, 26b, 26c) durch teleskopartig miteinander gekoppelte Rohre definiert sind.

7. Klappbares Element nach Anspruch 6,
**dadurch gekennzeichnet, dass** die Rückenden einiger der Rohre durch entsprechende Basiswände (27a, 29a) definiert sind, die quer zur Achse (6) verlaufen und einander zugewandt sind, um axial aneinander anzuschließen, wenn die Rohre vollständig ineinander übergegangen sind.

## Revendications

1. Elément pliable (5) d'un véhicule ferroviaire ; l'élément pliable comprenant :
- une plaque arrière (7) pouvant être reliée à un support (3) ;
- une structure d'absorption (18, 19), qui s'étend en porte-à-faux depuis ladite plaque arrière (7) le long d'un axe (6) sensiblement horizontal, qui est déformable plastiquement pour absorber de l'énergie, et qui comporte une extrémité avant supportant une plaque anti-escalade (20) ;
- un dispositif de guidage (25) comprenant ;
a) une pluralité de cloisons (31a, 31b, 31c) orthogonales audit axe (6), logées dans ladite structure d'absorption entre ladite plaque anti-escalade et ladite plaque arrière (20, 7) dans des positions espacées axialement les unes des autres, fixées à ladite structure d'absorption, et ayant, au centre, des trous coaxiaux respectifs (32) ;
b) une tige (26), qui est fixée à ladite plaque anti-escalade (20), qui s'étend le long dudit axe (6) à l'intérieur de ladite structure d'absorption, et qui s'engage dans lesdits trous (32) ;
**caractérisé en ce que**:
- ladite plaque anti-escalade (20) est fixée à l'extrémité avant de ladite structure d'absorption (18, 19) ;
- ladite tige (26) est constituée d'une pluralité de parties de tige (26a, 26b, 26c), qui sont coaxiales, qui sont accouplées de manière à coulisser axialement les unes par rapport aux autres et qui comprennent une partie de tige d'extrémité arrière (26c) ;
- ledit élément pliable (5) comprend des premiers moyens de fixation (24) destinés à fixer ladite partie de tige d'extrémité arrière (26c) à ladite plaque arrière (7) et/ou auxdites cloisons (31a, 31b, 31c).

2. Elément pliable selon la revendication 1, **caractérisé en ce que** lesdits premiers moyens de fixation (24) relient ladite partie de tige d'extrémité arrière (26c) à ladite plaque arrière (7).

3. Elément pliable selon l'une quelconque des revendications précédentes, **caractérisé en ce que** ladite tige (26) comprend en outre une partie de tige d'extrémité avant (26a) et au moins une partie de tige intermédiaire (26b).

4. Elément pliable selon la revendication 3, **caractérisé en ce qu'**il comprend des deuxièmes moyens de fixation (34) destinés à fixer ladite partie de tige intermédiaire (26b), lesdits deuxièmes moyens de fixation (34) pouvant être cassés au-dessus d'un seuil de contrainte donné le long dudit axe (6) .

5. Elément pliable selon la revendication 3 ou 4, **caractérisé en ce qu'**il comprend au moins une première cloison (31a) engagée de manière à coulisser axialement par ladite partie de tige d'extrémité avant (26a), et au moins une deuxième cloison (31b) engagée de manière à coulisser axialement par ladite partie de tige intermédiaire (26b).

6. Elément pliable selon l'une quelconque des revendications précédentes, **caractérisé en ce que** lesdites parties de tige (26a, 26b, 26c) sont définies par des tubes accouplés de manière télescopique les uns aux autres.

7. Elément pliable selon la revendication 6, **caractérisé en ce que** les extrémités arrière de certains desdits tubes sont définies par des parois de base respectives (27a, 29a), qui sont transversales audit axe (6) et qui se font face les unes aux autres de manière à buter axialement les unes contre les autres lorsque lesdits tubes sont entrés complètement les uns dans les autres.
